# EUROPÄISCHE PATENTSCHRIFT

(11) **EP 2 603 430 B1**
(45) Veröffentlichungstag und Bekanntmachung des Hinweises auf die Patenterteilung: **15.11.2017**
(21) Anmeldenummer: 11746452.9
(22) Anmeldetag: 20.07.2011
(51) Int. Cl.: B64D 45/00, G01M 5/00

(54) **BEPLANKUNGSPLATTE FÜR EIN STRUKTURBAUTEIL, STRÖMUNGSKÖRPER MIT EINER SOLCHEN BEPLANKUNGSPLATTE SOWIE VORRICHTUNG ZUR ÜBERWACHUNG EINES MATERIALSCHADENS AN EINER BEPLANKUNGSPLATTE**
PLANKING PANEL FOR A STRUCTURAL COMPONENT, FLOW BODY COMPRISING SUCH A PLANKING PANEL AND DEVICE FOR MONITORING MATERIAL DAMAGE ON SUCH A PLANKING PANEL
PANNEAU DE REVÊTEMENT POUR UN ÉLÉMENT DE STRUCTURE, CORPS D'ÉCOULEMENT COMPORTANT UN TEL PANNEAU DE REVÊTEMENT ET DISPOSITIF PERMETTANT DE SURVEILLER L'APPARITION D'UN ENDOMMAGEMENT DE MATÉRIAU SUR UN PANNEAU DE REVÊTEMENT

(30) Priorität: 20.07.2010 US 365863 P; 20.07.2010 US 365873 P; 20.07.2010 US 365882 P; 20.07.2010 US 365857 P; 20.07.2010 DE 102010031690; 20.07.2010 DE 102010031688; 20.07.2010 DE 102010027695; 20.07.2010 DE 102010027696
(43) Veröffentlichungstag der Anmeldung: 19.06.2013
(73) Patentinhaber: Airbus Operations GmbH, 21129 Hamburg (DE)
(72) Erfinder: ZUARDY, Ichwan, 21073 HAMBURG (DE); ZAHLEN, Pierre, 21680 STADE (DE); HERRMANN, Axel, Siegfried, 21684 STADE (DE)
(74) Vertreter: Bird & Bird LLP
(86) Internationale Anmeldenummer: PCT/EP2011/003644
(87) Internationale Veröffentlichungsnummer: WO 2012/010307

(56) Entgegenhaltungen:
- WO-A1-2008/144023
- GB-A- 2 029 019
- US-A- 4 484 132
- US-A- 5 969 260

## Beschreibung

Die Erfindung betrifft eine Beplankungsplatte für ein Strukturbauteil, die in ihrem sich flächig erstreckenden Innenbereich als Sandwich-Bauteil gebildet ist und einen ersten Hautabschnitt, einen zweiten Hautabschnitt sowie einem zwischen diesen gelegenen Kernabschnitt aufweist, wobei der Kernabschnitt den ersten und den zweiten Hautabschnitt flächig miteinander verbindet, einen Strömungskörper mit einer solchen Beplankungsplatte sowie eine Vorrichtung zur Überwachung eines Materialschadens an einer Beplankungsplatte.

Derartige Beplankungsplatten sind aus dem Stand der Technik bekannt und werden als Verkleidungsteile für die Gestaltung von Oberflächen in unterschiedlichen Industriezweigen verwendet. Durch die einfache Struktur kann mit diesen Bauteilen eine große Vielfalt von verschiedenen Oberflächenformen realisiert werden, so dass sich derartige Teile zum Beispiel für die Verwendung als Innenverkleidung in Fahrzeugen eignen. Solche Sandwichbauteile haben jedoch den Nachteil, dass der verhältnismäßig weiche Kernabschnitt rissempfindlich ist gegenüber mechanischen Belastungen, insbesondere den stoßartigen. Da der Kernabschnitt beidseitig von Hautabschnitten überdeckt wird, ist es schwer zu erkennen, ob das Bauteil einen Schaden aufweist, ohne das Bauteil dabei einer zerstörenden Prüfung zu unterziehen. Gerade im Bereich der bemannten Luftfahrt spielt die Funktionsfähigkeit der Fluggeräte und damit der Strukturintegrität der darin verbauten Bauteile eine wichtige Rolle. Ein undetektierbarer kritischer Schaden in einem sicherheitsrelevanten Bauteils kann zum Ausfall verschiedener technischer Systeme führen und damit eine katastrophale Folge verursachen. Aus diesem Grund werden im Flugzeugbau sicherheitsrelevante Teile in vorbestimmten Abständen, entsprechend einem Wartungsplan inspiziert, repariert und eventuell ersetzt, falls die Beschädigung wirtschaftlich nicht mehr reparierbar ist. Die Beplankung eines Flugzeuges ist im Flugbetrieb ständigen Kollisionsmöglichkeiten mit anderen Körpern ausgesetzt. Dabei wird das Flugzeug häufig von Steinen, bei Unwettern von Hagelkörnern oder sogar von Vögeln getroffen, die in die Flugbahn des Flugzeuges geraten. Der Aufprall eines solchen Fremdkörpers oder eines Teils desselben auf ein Beplankungselement, das in Sandwichbauweise ausgeführt ist, ist als besonders kritisch einzustufen, denn die Deformation die das Sandwichelement erfährt kann dazu führen, dass der Schaumstoffkern im Inneren reist oder sich von den in umgebenden Hautabschnitten löst, ohne dass eine solche Beschädigung von Außen sichtbar wäre.

Aus diesem Grund werden derartige Sandwichbauteile als sicherheitsrelevante Bauteile der Beplankung bislang im Flugzeugbau, insbesondere in der kommerziellen Luftfahrt, nicht verwendet.

Aufgabe der Erfindung ist es, eine Beplankungsplatte für ein Strukturbauteil mit möglichst günstigem Gewicht, einen Strömungskörper mit einer solchen Beplankungsplatte sowie eine Vorrichtung zur Überwachung eines Materialschadens an einer Beplankungsplatte anzugeben, das bzw. die für einen hauptlast-tragenden Bereich einer sicherheitskritischen Bauteilstruktur verwendet werden kann.

Eine Vorrichtung zur Überwachung eines Materialschadens an einer Beplankungsplatte ist bereits aus WO2008/144023 bekannt. Diese Aufgabe wird mit den Merkmalen der unabhängigen Patentansprüche gelöst. Weitere Ausführungsformen sind in den auf diesen rückbezogenen Unteransprüchen angegeben.

Durch die erfindungsgemäßen Lösungen ist eine nicht zerstörende Prüfung (Non *Destructive Testing*) einer Beplankungsplatte und insbesondere eine zuverlässige Erkennung aller Schadensarten möglich.

Die erfindungsgemäße Lösung einer Beplankungsplatte sieht vor, den Kernabschnitt einer als Sandwich-Platte ausgeführten Beplankungsplatte aus einem Schaumstoff zu bilden und trotz deren Anfälligkeit in einem hauptlast-tragenden Bereich der Flugzeugstruktur zu verwenden. Dabei wird jedoch die Intaktheit des Materials (Strukturintegrität) des Kernabschnitts durch zumindest eine Kontrollleitung überprüft, die eine Rissfestigkeit hat, die betragsmäßig geringer ist als die Rissfestigkeit des flächigen Bereichs des Kernabschnitts, wodurch die eine Ermittlung eines Schadens im Kernabschnitt zerstörungsfrei, leicht und sicher bewerkstelligt werden kann. Die Beplankungsplatte ist auf diese Weise als schadenstolerante Beplankungsplatte verwendbar, so dass diese sich insbesondere für eine Anwendung als Teil einer Flugzeugstruktur eignet.

Unter hauptlast-tragenden Bereich wird ein Bereich der Flugzeugstruktur verstanden, dessen Beschädigung zu einem katastrophalen Ereignis für das Flugzeug im Fluge führen kann, wenn die Beschädigung in einer Weise auftritt, bei der dieser Bereich Spannungen, die aus den an der Flugzeugstruktur angreifenden Hauptlasten resultieren, nicht mehr aushält.

Erfindungsgemäß ist eine Beplankungsplatte für ein Strukturbauteil vorgesehen, die in ihrem sich flächig erstreckenden Innenbereich als Sandwich-Bauteil gebildet ist und einen ersten Hautabschnitt, einen zweiten Hautabschnitt sowie einem zwischen diesen gelegenen und den ersten und den zweiten Hautabschnitt flächig miteinander verbindenden Kernabschnitt aufweist. Zur Schadensermittlung in einem fiktiven und hinsichtlich des Vorliegens eines Schadens jeweils betrachteten Kontrollvolumen des Kernabschnitts ist zumindest eine in diesem angeordnete Kontrollleitung oder ist eine Mehrzahl von sich über das zu kontrollierende Kontrollvolumen des Kernabschnitts erstreckende Kontrollleitungen angeordnet. Die Kontrollleitung ist oder die Kontrollleitungen sind in dem Kontrollvolumen je nach dem Anwendungsfall und derart angeordnet, dass mit diesen eine Schadensüberwachung des Kontrollvolumens erfolgen kann. Jede Kontrollleitung kann zum Anlegen eines Kontrollsignals jeweils an einem ersten Ende eine erste Anschlussstelle und an einem zweiten Ende eine zweite Anschlussstelle aufweisen. Alternativ kann eine Anschlussstelle an mehrere Kontrollleitungen angekoppelt sein. Dabei weisen die Kontrollleitungen insbesondere eine Rissfestigkeit auf, die in einem Bereich von 50% bis 100% der Rissfestigkeit des Kernabschnitts liegt.

Eine solche Anordnung bietet den Vorteil, dass Defekte im Kernabschnitt der Beplankungsplatte unmittelbar nach ihrer Entstehung erfassbar sind, wodurch ein defektes Bauteil besonders schnell als solches identifiziert werden kann, um anschließend ausgetauscht werden zu können.

In einer weiteren Ausführungsform der Erfindung liegt die Rissfestigkeit der Kontrollleitungen in einem Bereich von 80% bis 100% der Rissfestigkeit des Kernabschnitts besonders bevorzugt jedoch in einem Bereich von 90% bis 100% oder 90% bis 95% der Rissfestigkeit des Kernabschnitts.

Weiterhin kann der Kernabschnitt eine Zugfestigkeit im Bereich von 1,5 MPa bis 2,5 MPa und/oder eine Schubfestigkeit im Bereich von 0,8 MPa bis 1,6 MPa aufweisen.

Nach einer Ausführungsform der Erfindung ist vorgesehen, dass zumindest eine Kontrollleitung innerhalb des Kontrollvolumens mäanderförmig in der Beplankungsplatte unter Ausbildung von entlang der Dickenrichtung der Beplankungsplatte und zwischen den einander gegenüber liegenden Hautabschnitten verlaufenden Überbrückungsbereichen und diese jeweils verbindenden und jeweils in einem der einander gegenüber liegenden Hautabschnitte gelegenen Richtungsumkehrbereichen verläuft, wobei in Längsrichtung der Kontrollleitung hintereinander liegende Richtungsumkehrbereiche in unterschiedlichen Hautabschnitten gelegen sind. Dabei können die die Anschlussstellen der zumindest einen Kontrollleitung in unterschiedlichen Hautabschnitten oder in einem und demselben Hautabschnitt der Hautabschnitte gelegen sein.

Weiterhin können eine Mehrzahl von Kontrollleitungen in einer Dickenrichtung der Beplankungsplatte verlaufen wobei jede Kontrollleitung zwei Anschlussstellen aufweist, von denen eine erste an dem ersten Hautabschnitt und eine zweite an dem zweiten Hautabschnitt gelegen ist.

Durch die Anordnung können auf besonders einfache Weise Rissbildungen im Kernabschnitt ermittelt werden, die sich quer zur Dickenrichtung ausbreiten.

Nach einer Ausführungsform der Erfindung weist jede Kontrollleitung zwei Anschlussstellen auf. Nach einer weiteren Ausführungsform ist zumindest eine Anschlussstelle vorgesehen, die an mehrere Kontrollleitungen gekoppelt ist.

In einer weiteren Ausführungsform der vorliegenden Erfindung können eine Mehrzahl von Kontrollleitungen in einer Längsrichtung der Beplankungsplatte verlaufen wobei jede Kontrollleitung zwei Anschlussstellen aufweist, die beide an dem ersten Hautabschnitt oder beide an dem zweiten Hautabschnitt gelegen sind.

Durch die Anordnung können auf besonders einfache Weise Rissbildungen im Kernabschnitt ermittelt werden, die sich entlang der Dickenrichtung und damit quer zur Längsrichtung der Beplankungsplatte ausbreiten.

Weiterhin können die Kontrollleitungen elektrische Leiter, die Anschlussstellen elektrische Anschlussstellen und das Kontrollsignal eine elektrische Kontrollspannung sein.

Hieraus ergibt sich der Vorteil, dass die Kontrollspannung an je einen elektrischen Leiter angelegt werden kann. Wenn ein Stromfluss in dem Leiter nicht stattfindet, oder von einem vorbestimmten Stromwert abweicht, kann somit festgestellt werden, dass der Leiter und damit auch der Kernabschnitt beschädigt ist.

Weiterhin und/oder zusätzlich können die Kontrollleitungen optische Leiter, die Anschlussstellen optische Anschlussstellen und das Kontrollsignal ein optisches Kontrollsignal sein.

Die Verwendung von optischen Leitern als Kontrolleitungen bietet den Vorteil, dass Störsignale, die Beispielsweise von magnetischen Feldern ausgehen nicht wie bei elektrischen Leitern induziert werden und damit die Schadensermittlung auch in magnetischen Feldern sicher stattfinden kann. Dies bietet Vorteile insbesondere wenn das Flugzeug durch ein Gewitter fliegt in dem sich Blitze entladen, die magnetische Felder erzeugen.

Weiterhin kann das Kontrollsignal permanent an den Kontrolleitungen anliegen, oder das Kontrollsignal in vorbestimmten zeitlichen Abständen für eine vorbestimmte Zeitdauer an den Kontrolleitungen anliegen.

Die erste Ausführungsvariante bietet den Vorteil, dass eine Beschädigung sofort ermittelbar ist. Wenn ein Kontrollsignal permanent anliegt führt eine Unterbrechung der Leitung zu einem sofortigen Signalabbruch und damit zu einer unmittelbaren Schadenserkennung. Die zweite Ausführungsalternative bietet den Vorteil einer verhaltensmäßig gleichbleibenden Inspektionstätigkeit für Wartungspersonal, so dass deren Wartungstätigkeiten genauer definiert und optimiert werden können. Weiterhin ist eine Messung in ruhendem Zustand meistens zuverlässiger als im Betrieb ist.

Nach einer erfindungsgemäßen Ausführungsform ist bei der Beplankungsplatte der Kernabschnitt aus einem homogenen Material gebildet.

Weiterhin kann der Kernabschnitt ein Schaumkern und insbesondere ein Aluminiumschaumkern, ein Keramikkern, ein Sandwichkern sein oder aus diesem gebildet sein. Nach einer anderen Ausführungsform weist der Kernabschnitt selbst eine Zwischenschicht auf und/oder ist als ein Kernverbund aus mehreren Sandwichkernen ausgeführt.

Weiterhin kann die Rissfestigkeit der Kontrollleitungen einer Zugfestigkeit im Bereich von 1,5 MPa bis 2,5 MPa und einer Schubfestigkeit von 0,8 MPa bis 1,6 MPa entsprechen.

Ein weiterer Aspekt der vorliegenden Erfindung betrifft einen Strömungskörper, insbesondere für ein Flugzeug, mit einer Beplankungsplatte.

Nach einem weiteren Ausführungsbeispiel ist eine Vorrichtung zur Überwachung eines Material- bzw. Strukturschadens an einer Beplankungsplatte vorgesehen, wobei die Überwachungsvorrichtung eine Ansteuerungsvorrichtung zum Senden eines Signals über die Kontrollleitung und eine Auswertungsvorrichtung aufweist, mit der aufgrund des über die Kontrollleitung gesendeten Signals zur Identifizierung eines Schadens in dem Schaumabschnitt feststellbar ist, ob die Kontrollleitung intakt ist, wobei die Ansteuerungsvorrichtung derart ausgeführt ist, dass diese das Kontrollsignal zeitlich permanent oder in vorbestimmten zeitlichen Abständen über die Kontrollleitungen sendet.

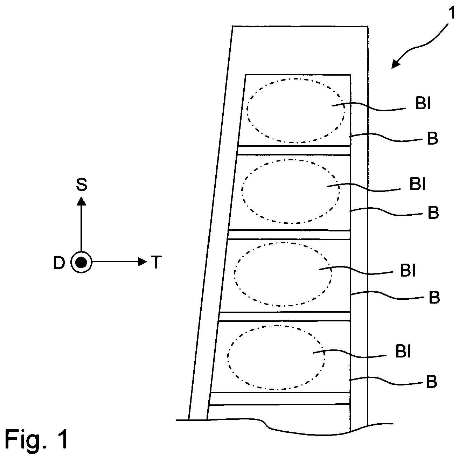

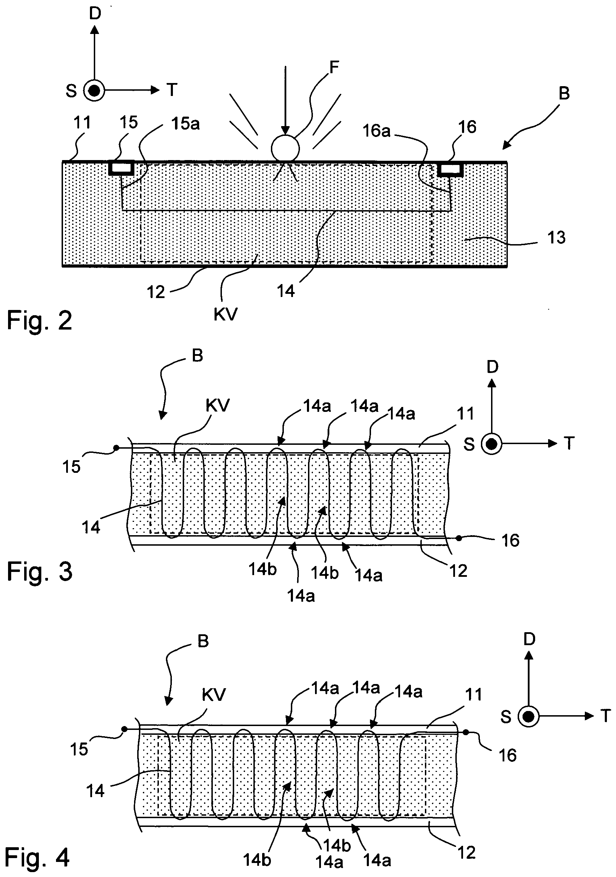

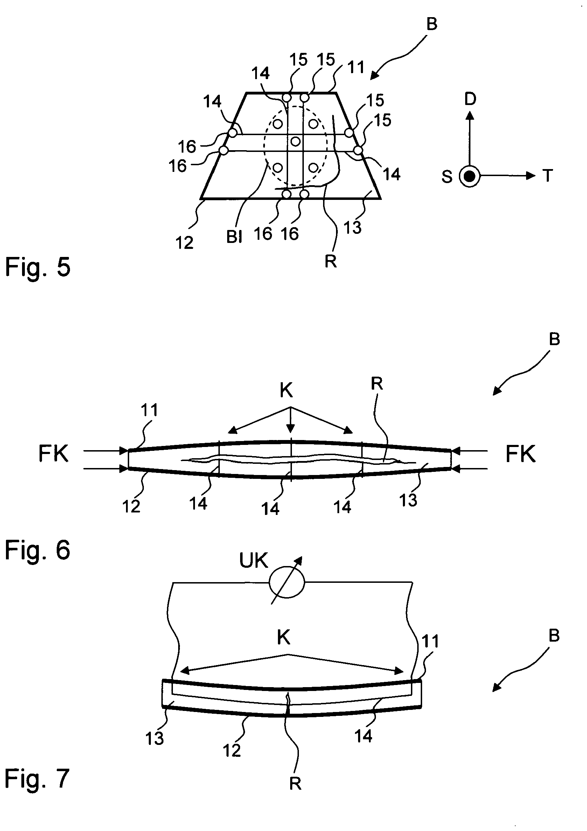

Im Folgenden werden Ausführungsbeispiele der Erfindung an Hand der beigefügten schematischen Figuren beschrieben, die zeigen:
▪ Figur 1 eine Draufsicht auf einen Abschnitt eines Flugzeugleitwerk mit einer erfindungsgemäßen Beplankungsplatte,
▪ Figur 2 einen Teilschnitt durch eine erfindungsgemäße Beplankungsplatte, gemäß einer ersten Ausführungsform der Erfindung, bei der die Beplankungsplatte zur Ermittlung eines Schadens in einem Kontrollvolumen des Kernabschnitts eine sich in der Längserstreckung des Kernabschnitts verlaufende Kontrollleitung aufweist,
▪ Figur 3 einen Teilschnitt durch eine erfindungsgemäße Beplankungsplatte, gemäß einer weiteren Ausführungsform der Erfindung, bei der die Beplankungsplatte eine mäanderförmig in der Kernschicht verlaufende Kontrollleitung aufweist, wobei die an dieser Kontrollleitung angekoppelten Anschlussvorrichtungen jeweils an unterschiedlichen Hautabschnitten vorgesehen sind,
▪ Figur 4 einen Teilschnitt durch eine erfindungsgemäße Beplankungsplatte, gemäß einer weiteren Ausführungsform der Erfindung, bei der die Beplankungsplatte eine mäanderförmig in der Kernschicht verlaufende Kontrollleitung aufweist, wobei die an dieser Kontrollleitung angekoppelten Anschlussvorrichtungen jeweils an demselben Hautabschnitt vorgesehen sind,
▪ Figur 5 einen Teilschnitt durch eine erfindungsgemäße Beplankungsplatte, mit einer Vielzahl von Anordnungsvarianten der Kontrollleitungen
▪ Figur 6 einen Teilschnitt durch eine erfindungsgemäße Beplankungsplatte, gemäß einer zweiten Ausführungsform,
▪ Figur 7 einen weiteren Teilschnitt durch eine erfindungsgemäße Beplankungsplatte.

Die Figur 1 zeigt ein Strukturbauteil 1 mit einer Vielzahl von erfindungsgemäßen Beplankungsplatten B, die zumindest teilweise eine Oberfläche des Strukturbauteils 1 bilden. Bei dem Strukturbauteil 1 kann es sich um ein Strömungskörper 1, wie beispielsweise um ein Leitwerk eines Flugzeugs, insbesondere um ein Flugzeugflügel, ein Höhenruder, ein Seitenruder oder um einen Teil des Flugzeugrumpfes handeln.

Zur Orientierung ist ein Koordinatensystem dargestellt, dass eine Tiefenrichtung T, eine Spannweitenrichtung S und eine Dickenrichtung D des Flugzeugflügels bzw. des Strukturbauteils und damit der Beplankungsplatte B definiert.

Dieses Koordinatensystem ist auch in der Figur 2 dargestellt, die eine Kollision eines Fremdkörpers F mit dem Beplankungselement B darstellt. Die Figur 2 ist eine Teilschnittansicht entlang einer Schnittlinie, die in einer Ebene verläuft, welche von der der Dickerichtung D und der Spannweitenrichtung S in Figur 1 aufgespannt wird. Das Beplankungselement B weist in seinem in Dickenrichtung D oberen Bereich einen ersten Hautabschnitt 11 und an seinem, entgegen der Dickenrichtung D unteren Bereich, einen zweiten Hautabschnitt 12 auf. Die Hautabschnitt 11, 12 weisen eine geringe Dicke im Vergleich zu ihrer seitlichen Ausdehnung auf, und bilden damit flächige, plattenförmige Körper. Zwischen dem ersten Hautabschnitt 11 und dem zweiten Hautabschnitt 12 ist eine Kernschicht 13 vorgesehen, die im Vergleich zu den Hautabschnitten 11, 12 eine höhere Dicke aufweist. An ihren Oberflächen ist die Kernschicht 13 mit der ersten Hautschicht 11 flächig in Kontakt. Darüber hinaus steht die Kernschicht 13 an ihrer unteren Oberfläche mit der zweiten Hautschicht 12 flächig in Kontakt. Der flächige Kontakt kann durch ein Befestigungsmittel weiter verstärkt werden, beispielweise durch Vorsehen eines Klebers zwischen der Kernschicht und der Hautschicht oder durch Vorsehen von Schraub- oder Nietverbindungen. Wie aus Figur 1 zu erkennen ist, weisen die Beplankungsplatten B einen Innenbereich IB auf, in dem die Kontrollleitungen 14 verlaufen.

In der in Figur 2 dargestellten ersten Ausführungsform der Erfindung verläuft eine Kontrollleitung 14 in einer Längsrichtung der Beplankungsplatten B durch die Kernschicht 13 der Beplankungsplatte B. Die Kontrollleitung 14 weist ein erstes Ende 14a und ein zweites Ende 14b auf, wobei das erste Ende 14a mit einer ersten Anschlussstelle 15 verbunden ist und das zweite Ende 16a mit einer zweiten Anschlussstelle 16 verbunden ist. Die Anschlussstellen 15, 16 sind beide in der ersten Hautschicht 11 vorgesehen, können jedoch in einer alternative Ausführungsform der Erfindung auch in der zweiten Hautschicht 12 angeordnet sein. Über die Anschlussstellen 15, 16 kann die Kontrollleitung 14 von Außen mit einem Kontrollsignal beaufschlagt werden, wobei das Kontrollsignal von der ersten Anschlussstelle 15 zu der zweiten Anschlussstelle 16 oder umgekehrt geleitet wird.

Als Kontrollleitung 14 können dabei elektrische Leiter oder optische Leiter wie zum Beispiel Glasfaserkabel verwendet werden. Ein diesen Leitungen entsprechendes Kontrollsignal muss dann als elektrisches oder optisches Signal eingespeist werden. Mit einem externen oder auch intern in der Beplankungsplatte B angeordnetem Diagnosesystem wird ermittelt ob das eingeleitete Signal durch die Kontrollleitung 14 übertragen wird. Durch die Verwendung von elektrischen Leitern können besonders kostengünstige Beplankungselemente B hergestellt werden, wobei die hohe Robustheit der elektrischen Leitungen den Aufwand des Fertigungsprozess der Beplankungsplatten B reduziert. Die Verwendung von optischen Kontrolleitern bietet den Vorteil, dass die Beplankungsplatten B gegenüber elektro-magnetischen Störungen unempfindlich sind.

In Figur 7 ist die erste Ausführungsform der Erfindung dargestellt, wobei beispielsweise eine Rissbildung R eingezeichnet ist, die sich durch den Aufschlag des Fremdkörpers F aus Figur 2 ergibt. Dieser Aufschlag führt zu einer Durchbiegung der gesamten Beplankungsplatte B, wobei der Kernabschnitt 13 im Inneren der Platte eine Zugbelastung, die in seiner Längsrichtung wirkt, ausgesetzt ist. Wenn diese Zugbelastung einen maximalen Materialwert übersteigt reist der Kernabschnitt 13 und es bildet sich der dargestellte Riss. Die Kontrollleitung 14 verläuft entlang der Längsrichtung der Beplankungsplatte B und weist im Wesentlichen die gleiche Rissfestigkeit auf, wie das Material aus dem der Kernabschnitt 13 aufgebaut ist. Wenn also der Kernabschnitt 13 reist, wird unmittelbar auch die Kontrollleitung 14 unterbrochen. Eine Signalweiterleitung kann nicht stattfinden und das Diagnosegerät detektiert einen Schadensfall. In Figur 7 wird eine Kontrollspannung Uk an die Anschlussstellen 15, 16 der Kontrollleitungen 14 angelegt, so dass als Kontrollsignal eine vorbestimmte Stromstärke durch die Kontrollleitung 14 fließt.

Zur Schadensermittlung muss eine Signalübertragung jedoch nicht vollständig ausfallen. In einer alternativen Ausführungsform der Erfindung kann als Kontrollsignal eine elektrische Spannung UK angelegt sein, die einen Stromfluss mit einem vorbestimmten Stromwert in der Kontrollleitung 14 erzeugt. Wenn das Diagnosegerät einen Stromfluss erfasst mit dem vorbestimmten Stromwert, wird detektiert, dass keine Beschädigung vorliegt. Wird jedoch ein Stromwert detektiert der von dem vorbestimmten Stromwert abweicht, wird auf diese Weise eine Beschädigung der Beplankungsplatte B ermittelt. Diese Ausführungsform ist natürlich kombinierbar mit der Ausführungsform in der nur der Stromwert "Null" als Schadensfall ermittelt wird.

Das Kontrollsignal kann die Kontrollleitung 14 permanent oder gepulst durchfließen. Wenn die Kontrollleitung 14 unterbrochen ist, so findet ab dem Zeitpunkt ihrer Unterbrechung keine Signalweiterleitung mehr statt, was von dem Diagnosegerät, das gleichzeitig auch das Kontrollsignal ausgibt sofort detektiert wird. Bei zeitlich gepulster Signalbeaufschlagung wird mit dem ersten Signal, das nach einem Schadensfall in die Kontrollleitung 14 eingespeist wird und nicht übermittelt werden kann von dem Diagnosegerät festgestellt, dass eine Beschädigung an der Beplankungsplatte B vorliegt. Auf diese Weise kann im Vergleich zur permanenten Signalübertragung Energie eingespart werden.

Die Kontrollleitungen 14 haben eine Rissfestigkeit, die auf die Materialeigenschaften des Kernabschnitts 13 abgestimmt sind. Dabei liegt die Rissfestigkeit in einem Bereich von 50% bis 100%, bevorzugt von 80% bis 100% und besonders bevorzugt von 90% bis 100% der Rissfestigkeit des Materials des Kernabschnitts 13. Dadurch kann sichergestellt werden, dass wenn der Kernabschnitt 13 eine Beschädigung in Form eines Risses erleidet, auch die Kontrollleitung 14 zerstört wird. In einer weiteren bevorzugten Ausführungsform der vorliegenden Erfindung liegt die Rissfestigkeit der Kontrollleitung 14 im Bereich von 80% bis 95% der Rissfestigkeit des Materials des Kernabschnitts 13. Diese Ausführungsform bietet den Vorteil, dass selbst wenn der Kernabschnitt 13 noch nicht beschädigt worden ist, sondern nur einer Belastung ausgesetzt wurde, die in Belastungsgrenzbereich seines Materials liegt die Kontrollleitung 14 in diesem Bereich durchtrennt wird, so dass das Diagnosesystem erkennt, dass die Beplankungsplatte B zumindest einer Belastung im Grenzbereich ausgesetzt war. Daraufhin kann vorab eine Warnmeldung von dem Diagnosegerät ausgegeben werden, und die Beplankungsplatte B ersetzt werden, bevor ein tatsächlicher Schadensfall auftritt.

Vorzugsweise entspricht die Rissfestigkeit der Kontrollleitungen 14 einer Zugfestigkeit die im Bereich von 1,5 MPa bis 2,5 MPa liegt, besonders bevorzugt jedoch 1,9 MPa beträgt und/oder einer Schubfestigkeit die im Bereich von 0,8 MPa bis 1,6 MPa liegt bevorzugt jedoch 1,15MPa beträgt.

In Figur 5 ist eine Vielzahl möglicher Anordnungen der Kontrollleitungen 14 gezeigt, wobei die Anschlussstellen 15, 16 der Kontrollleitungen 14 nicht notwendiger Weise an dem gleichen Hautabschnitt vorgesehen sein müssen. Die Kontrollleitungen 14 können von einem erst Hautabschnitt 11 zu einem zweiten Hautabschnitt 12, im Wesentlichen parallel zur Dickenrichtung D verlaufen. Alternativ oder zusätzlich hierzu können die Hautabschnitte 11, 12 auch vertikal angeordnet sein, so dass die Kontrollleitungen 14 im Wesentlichen parallel zu Tiefenrichtung T verlaufen. In Figur 5 ist ferner beispielhaft ein Riss R dargestellt, wie er nach einem Einschlag eines Fremdkörpers F, wie in Figur 1 dargestellt, denkbar wäre. Der Verlauf des Risses kreuzt zumindest eine der Kontrollleitungen 14, so dass eine Signalweiterleitung entlang dieser, durchtrennten Kontrollleitungen 14 nicht mehr möglich ist.

Figur 6 zeigt eine weitere Ausführungsform der vorliegenden Erfindung, wobei der Aufbau der Beplankungsplatte B als Sandwichbauteil der gleiche ist wie mit Bezug zu Figur 1 beschrieben. Die Kontrollleitungen 14 verlaufen jedoch von dem ersten Hautabschnitt 11 zu dem zweiten Hautabschnitt 12, und sind dabei an vorbestimmten, kritischen Punkten K der Beplankungsplatte B vorgesehen. Ein dargestellter Riss, breitet sich im Wesentlichen parallel zu den Hautabschnitten 11, 12 aus und somit quer zu dem Verlauf der Kontrollleitungen 14. Ein seitlich auf die Beplankungsplatte B auftreffender Fremdkörper F erzeugt einen Kraftstoß, der mit den Vektoren FK dargestellt ist und zu einer Stauchung der Beplankungsplatte B führt. Unter der Krafteinwirkung biegen sich die Hautabschnitte 11, 12 durch und zwar von dem Kernabschnitt 13 weg, so dass der abgebildete Riss R entsteht. Der Riss R durch trennt dabei auch die Kontrollleitungen 14, so dass diese Kontrollsignale nicht mehr weitergeleiten werden können und von dem Diagnosegerät eine Beschädigung der Beplankungsplatte festgestellt wird.

Die in dem Kontrollvolumen KV erfindungsgemäß vorgesehenen Kontrollleitungen oder Anordnung von Kontrollleitungen kann bzw. können in verschiedener Weise in dem Kontrollvolumen VK verlaufen. Eine weitere bevorzugte Ausführungsform der Erfindung ist in der Figur 3 dargestellt, bei der die Beplankungsplatte B eine mäanderförmig in der Kernschicht oder dem Kernabschnitt 13 verlaufende Kontrollleitung 14 aufweist, wobei die an dieser Kontrollleitung 14 angekoppelten Anschlussvorrichtungen 15, 16 jeweils an unterschiedlichen Hautabschnitten 11 bzw. 12 vorgesehen sind. Eine Variante dieser Ausführungsform ist in der Figur 4 dargestellt, bei der die Beplankungsplatte B eine mäanderförmig in der Kernschicht oder dem Kernabschnitt 13 verlaufende Kontrollleitung 14 aufweist, wobei die an dieser Kontrollleitung 14 angekoppelten Anschlussvorrichtungen 15, 16 jeweils an demselben Hautabschnitt 11 bzw. 12 vorgesehen sind.

## Patentansprüche

1. Beplankungsplatte (B) für ein Strukturbauteil (1), die in ihrem sich flächig erstreckenden Innenbereich (BI) als Sandwich-Bauteil gebildet ist und einen ersten Hautabschnitt (11), einen zweiten Hautabschnitt (12) sowie einen zwischen diesen gelegenen Kernabschnitt (13) aufweist, der ersten und zweiten Hautabschnitt (11, 12) flächig miteinander verbindet,
**dadurch gekennzeichnet,**
**dass** in der Beplankungsplatte (B) zur Ermittlung eines Schadens in ein Kontrollvolumen (KV) des Kernabschnitts (13) zumindest eine sich über einen Bereich des Kernabschnitts (13) erstreckende Kontrollleitung (14) angeordnet ist, die zum Anlegen eines Kontrollsignals jeweils an eine erste Anschlussstelle (15) und an eine zweite Anschlussstelle (16) angekoppelt ist, wobei die Kontrollleitung (14) eine Rissfestigkeit hat, die betragsmäßig in einem Bereich von 50% bis 100% des Betrags der Rissfestigkeit des flächigen Bereichs des Kernabschnitts (13) liegt.

2. Beplankungsplatte (B) nach Anspruch 1, **dadurch gekennzeichnet, dass** der Kernabschnitt (13) eine Zugfestigkeit im Bereich von 1,5 MPa bis 2,5 MPa und/oder ein Schubfestigkeit im Bereich von 0,8 MPa bis 1,6 MPa aufweist.

3. Beplankungsplatte (B) nach Anspruch 1 oder 2, **dadurch gekennzeichnet, dass** zumindest eine Kontrollleitung (14) mäanderförmig in der Beplankungsplatte (B) unter Ausbildung von entlang der Dickenrichtung der Beplankungsrichtung (B) und zwischen den einander gegenüberliegenden Hautabschnitten (11, 12) verlaufenden Überbrückungsbereichen (14a) und diese jeweils verbindenden und jeweils in einem der einander gegenüberliegenden Hautabschnitte (11, 12) gelegenden Richtungsumkehrbereichen (14b) verläuft.

4. Beplankungsplatte (B) nach Anspruch 3, **dadurch gekennzeichnet, dass** die Anschlussstellen (15, 16) der zumindest einen Kontrollleitung (14) in unterschiedlichen Hautabschnitten (11, 12) gelegen sind.

5. Beplankungsplatte (B) nach Anspruch 3, **dadurch gekennzeichnet, dass** die Anschlussstellen (15, 16) der zumindest einen Kontrollleitung (14) in einem und demselben Hautabschnitt der Hautabschnitte (11, 12) gelegen sind.

6. Beplankungsplatte (B) nach Anspruch 1 oder 2, **dadurch gekennzeichnet, dass** die Beplankungsplatte (B) eine Mehrzahl von Kontrollleitungen (14) aufweist, die entlang der Dickenrichtung (D) der Beplankungsplatte (B) verlaufen, wobei jede Kontrollleitung (14) zwei Anschlussstellen (15, 16) aufweist, von denen jeweils eine erste an dem ersten Hautabschnitt (11) und jeweils eine zweite an dem zweiten Hautabschnitt (12) gelegen ist.

7. Beplankungsplatte (B) nach Anspruch 1 oder 2, **dadurch gekennzeichnet, dass** die Beplankungsplatte (B) eine Mehrzahl von Kontrollleitungen (14) entlang der Längsrichtung der Beplankungsplatte (B) verlaufen und jede Kontrollleitung (14) zwei Anschlussstellen (15, 16) aufweist, die beide an dem ersten Hautabschnitt (11) oder beide an dem zweiten Hautabschnitt (12) gelegen sind.

8. Beplankungsplatte (B) nach einem der Ansprüche 1 bis 7, **dadurch gekennzeichnet, dass** die Kontrollleitungen (14) elektrische Leiter sind, die Anschlussstellen (15, 16) elektrische Anschlussstellen sind und das Kontrollsignal eine elektrische Kontrollspannung ist.

9. Beplankungsplatte (B) nach einem der Ansprüche 1 bis 7, **dadurch gekennzeichnet, dass** die Kontrollleitungen (14) optische Leiter sind, die Anschlussstellen (15, 16) optische Anschlussstellen sind und das Kontrollsignal ein optisches Kontrollsignal ist.

10. Beplankungsplatte (B) nach einem der voranstehenden Ansprüche, **dadurch gekennzeichnet, dass** der Kernabschnitt (13) aus einem homogenen Material gebildet ist, das vorzugsweise spezifisch leichter als die beiden Hautabschnitte (11, 12) ist.

11. Beplankungsplatte (B) nach einem der voranstehenden Ansprüche, **dadurch gekennzeichnet, dass** der Kernabschnitt (13) ein Schaumkern, insbesondere ein Kunststoffschaumkern, Aluminiumschaumkern, ein Keramikkern, oder ein Massivkern ist.

12. Beplankungsplatte (B) nach einem der Ansprüche 1 bis 10, **dadurch gekennzeichnet, dass** der Kernabschnitt (13) ein Kernverbund aus mehreren Sandwichkernen ist.

13. Beplankungsplatte (B) nach einem der voranstehenden Ansprüche, **dadurch gekennzeichnet, dass** die Rissfestigkeit der Kontrollleitungen (14) einer Zugfestigkeit im Bereich von 1,5 MPa bis 2,5 MPa und einer Schubfestigkeit von 0,8 MPa bis 1,6 MPa entspricht.

14. Strömungskörper, insbesondere für ein Flugzeug, mit einer Beplankungsplatte (B) nach einem der voranstehenden Ansprüche.

15. Vorrichtung zur Überwachung eines Materialschadens an einer Beplankungsplatte (B) nach einem der voranstehenden Ansprüche, **dadurch gekennzeichnet, dass** die Überwachungsvorrichtung eine Ansteuerungsvorrichtung zum Senden eines Signals über die Kontrollleitung (14) und eine Auswertungsvorrichtung aufweist, mit der aufgrund des über die Kontrollleitung gesendeten Signals zur Identifizierung eines Schadens in dem Schaumabschnitt feststellbar ist, ob die Kontrollleitung intakt ist, wobei die Ansteuerungsvorrichtung derart ausgeführt ist, dass diese das Kontrollsignal (UK) zeitlich permanent oder in vorbestimmten zeitlichen Abständen über die Kontrollleitungen (14) sendet.

## Claims

1. A planking panel (B) for a structural component (1), said planking panel being formed as a sandwich component in the inner region (Bl) thereof that extends in a planar manner and comprising a first skin section (11), a second skin section (12) and a core section (13) located between said two sections, which connects the first and second skin sections (11, 12) to one another in a planar manner,
**characterized in that**,
in order to determine damage in a control volume (KV) of the core section (13), at least one control line (14) is arranged in the planking panel (B) and extends over a region of the core section (13), which control line is connected, for the purpose of application of a control signal, respectively to a first connection point (15) and to a second connection point (16), wherein the control line (14) has a tear strength that ranges from 50% to 100% of the tear strength of the planar region of the core section (13).

2. The planking panel (B) according to Claim 1, **characterized in that** the core section (13) has a tensile strength in the range of 1.5 MPa to 2.5 MPa and/or a shear strength ranging from 0.8 MPa to 1.6 MPa.

3. The planking panel (B) according to Claim 1 or 2, **characterized in that** at least one control line (14) extends in a meandering manner in the planking panel (B) while forming bridging regions (14a) which extend along the thickness direction of the planking direction (B) and between the skin sections (11, 12) lying opposite one another and forming direction change regions (14b) connecting these and lying in one of the skin sections (11, 12) which lie opposite one another.

4. The planking panel (B) according to Claim 3, **characterized in that** the connection points (15, 16) of the at least one control line (14) lie in different skin sections (11, 12).

5. The planking panel (B) according to Claim 3, **characterized in that** the connection points (15, 16) of the at least one control line (14) lie in one and the same skin section of the skin sections (11, 12).

6. The planking panel (B) according to Claim 1 or 2, **characterized in that** the planking panel (B) has a plurality of control lines (14), which extend along the thickness direction (D) of the planking panel (B), wherein each control line (14) has two connection points (15, 16), a first of which connection points lies on the first skin section (11) and a second of which connection points lies on the second skin section (12).

7. The planking panel (B) according to Claim 1 or 2, **characterized in that** the planking panel (B) has a plurality of control lines (14) extending in the longitudinal direction of the planking panel (B) and each control line (14) has two connection points (15, 16), which are both lying on the first skin section (11) or both lying on the second skin section (12).

8. The planking panel (B) according to one of Claims 1 to 7, **characterized in that** the control lines (14) are electrical conductors, the connection points (15, 16) are electrical connection points and the control signal is an electric control voltage.

9. The planking panel (B) according to one of Claims 1 to 7, **characterized in that** the control lines (14) are optical conductors, the connection points (15, 16) are optical connection points and the control signal is an optical control signal.

10. The planking panel (B) according to one of the preceding claims, **characterized in that** the core section (13) is formed from a homogeneous material, which is preferably specifically lighter than the two skin sections (11, 12).

11. The planking panel (B) according to one of the preceding claims, **characterized in that** the core section (13) is a foam core, in particular a plastic foam core, an aluminum foam core, a ceramic core, or a solid core.

12. The planking panel (B) according to one of Claims 1 to 10, **characterized in that** the core section (13) is a core composite made up of several sandwich cores.

13. The planking panel (B) according to one of the preceding claims, **characterized in that** the tear strength of the control lines (14) corresponds to a tensile strength in the range of 1.5 MPa to 2.5 MPa and a shear strength of 0.8 MPa to 1.6 MPa.

14. A flow body, in particular for an aircraft, with a planking panel (B) according to one of the preceding claims.

15. A device for monitoring material damage to a planking panel (B) according to one of the preceding claims, **characterized in that** the monitoring device has a control device for sending a signal via the control line (14) and an evaluation device which, on the basis of the signal sent via the control line for identification of damage in the foam section, permits determination of whether or not the control line is intact, with the control device being designed such that it sends the control signal (UK) in a constant manner or at predetermined time intervals via the control lines (14).

## Revendications

1. Plaque de revêtement (B) pour un élément structural (1) qui est formée comme une partie en sandwich s'étendant à plat dans sa zone intérieure (BI) et qui présente un premier segment principal (11), un second segment principal (12) et un segment (13) de partie centrale disposé entre celles-ci qui relie ensemble à plat le premier et le second segment principal (11, 12),
**caractérisée en ce que**
dans la plaque de revêtement (B) pour déterminer un dommage dans un volume de commande (KV) du segment (13) de partie centrale est disposée au moins une ligne (14) de commande s'étendant sur une zone du segment (13) de partie centrale, qui est couplée pour alimenter un signal de commande respectivement sur un premier point de connexion (15) et sur un second point de connexion (16), la ligne de commande (14) présentant une résistance à la fissuration qui se situe en importance dans une plage comprise entre 50 % et 100 % de l'importance de la résistance à la fissuration de la zone plate du segment (13) de partie centrale.

2. Plaque de revêtement (B) selon la revendication 1, **caractérisée en ce que** le segment (13) de partie centrale présente une résistance à la traction dans une plage comprise entre 1,5 MPa et 2,5 MPa et/ou une résistance au cisaillement dans la plage entre 0,8 MPa et 1,6 MPa.

3. Plaque de revêtement (B) selon la revendication 1 ou 2, **caractérisée en ce qu'**au moins une ligne de commande (14) s'étend en méandres dans la plaque de revêtement (B) afin de former des zones de comble (14a) s'étendant dans la direction de l'épaisseur de la plaque de revêtement (B) et des zones (14b) de changement de direction disposées respectivement dans l'un des segments principaux (11, 12) reliant celles-ci respectivement et disposées respectivement dans l'un des segments principaux (11, 12) se faisant face.

4. Plaque de revêtement (B) selon la revendication 3, **caractérisée en ce que** les points de connexion (15, 16) de l'au moins une ligne de commande (14) se situent dans différents segments principaux (111, 12).

5. Plaque de revêtement (B) selon la revendication 3, **caractérisée en ce que** les points de connexion (15, 16) de l'au moins une ligne de commande (14) se situent dans un seul et même segment principal des segments principaux (11, 12).

6. Plaque de revêtement (B) selon la revendication 1 ou 2, **caractérisée en ce que** la plaque de revêtement (B) présente une pluralité de lignes de commande (14) qui s'étendent dans la direction de l'épaisseur (D) de la plaque de revêtement (B), chaque ligne de commande (14) présentant deux points de connexion (15, 16), parmi lesquels est disposé respectivement un premier sur le premier segment principal (11) et respectivement un second sur le second segment principal (12).

7. Plaque de revêtement (B) selon la revendication 1 ou 2, **caractérisée en ce que** la plaque de revêtement (B) présente une pluralité de lignes de commande (14) qui s'étendent dans la direction longitudinale de la plaque de revêtement (B) et chaque ligne de commande (14) présente deux points de connexion (15, 16), les deux étant disposés sur le premier segment principal (11) ou sur le second segment principal (12).

8. Plaque de revêtement (B) selon l'une quelconque des revendications 1 à 7, **caractérisée en ce que** les lignes de commande (14) sont des conducteurs électriques, les points de connexion (15, 16) sont des points de connexion électriques et le signal de commande est une tension électrique de commande.

9. Plaque de revêtement (B) selon l'une quelconque des revendications 1 à 7, **caractérisée en ce que** les lignes de commande (14) sont des conducteurs optiques, les points de connexion (15, 16) sont des points de connexion optique et le signal de commande est un signal de commande optique.

10. Plaque de commande (B) selon l'une quelconque des revendications précédentes, **caractérisée en ce que** le segment (13) de partie centrale est constitué d'un matériau homogène qui est de préférence spécifiquement plus léger que les deux segments principaux (11, 12).

11. Plaque de revêtement (B) selon l'une quelconque des revendications précédentes, **caractérisée en ce que** le segment (13) de partie centrale est un noyau de mousse, en particulier un noyau de mousse synthétique, un noyau de mousse en aluminium, un noyau en céramique ou un noyau plein.

12. Plaque de revêtement (B) selon l'une quelconque des revendications 1 à 10, **caractérisée en ce que** le segment principal (13) est un composite de noyau constitué de plusieurs noyaux en sandwich.

13. Plaque de revêtement (B) selon l'une quelconque des revendications précédentes, **caractérisée en ce que** la résistance à la fissure des lignes de commande (14) correspond à une résistance de traction dans la plage comprise entre 1,5 MPa et 2,5 MPa et à une résistance au cisaillement entre 0,8 MPa et 1,6 MPa.

14. Corps d'écoulement, en particulier pour un aéronef, comprenant une plaque de revêtement (B) selon l'une quelconque des revendications précédentes.

15. Dispositif de surveillance d'un dommage de matériau sur une plaque de revêtement (B) selon l'une quelconque des revendications précédentes, **caractérisée en ce que** le dispositif de surveillance présente un dispositif de commande destiné à envoyer un signal par l'intermédiaire de la ligne de commande (14) et un dispositif d'évaluation, qui permet de constater sur la base du signal envoyé par l'intermédiaire de la ligne de commande destiné à identifier un dommage dans le segment de mousse si la ligne de commande est intacte, le dispositif de commande étant conçu de telle sorte que celui-ci envoie le signal de commande (UK) de manière continue dans le temps ou à des intervalles temporels prédéfinis par l'intermédiaire des lignes de commande (14).
